# FASCICULE DE BREVET EUROPEEN

(11) **EP 3 862 618 B1**
(45) Date de publication et mention de la délivrance du brevet: **26.06.2024**
(21) Numéro de dépôt: 21152450.9
(22) Date de dépôt: 20.01.2021
(51) Int. Cl.: F17C 6/00

(54) **PROCÉDÉ DE LIVRAISON DE GAZ LIQUÉFIÉ**
FLÜSSIGGASLIEFERUNSPROZESS
LIQUEFIED GAS DELIVERY PROCESS

(30) Priorité: 05.02.2020 FR 2001121
(43) Date de publication de la demande: 11.08.2021
(73) Titulaire: L'Air Liquide, société anonyme pour l'Étude et l'Exploitation des procédés Georges Claude, 75007 Paris (FR)
(72) Inventeur: ALLIDIERES, Laurent, 75321 PARIS (FR); FAYER, Thomas, 38360 SASSENAGE (FR); BARJHOUX, Pierre, 38360 SASSENAGE (FR)
(74) Mandataire: Air Liquide

(56) Documents cités:
- EP-A1- 1 691 127
- DE-B- 1 277 059
- FR-A1- 3 018 111
- US-A1- 2015 000 334

## Description

L'invention concerne un procédé de livraison de gaz liquéfié.

Un procédé de livraison de gaz liquéfié est connu de US 2015/000334 A1,

L'invention concerne plus particulièrement un procédé de livraison de gaz liquéfié, notamment d'hydrogène, au moyen d'au moins un stockage mobile transporté par camion, comprenant une étape de remplissage du stockage mobile en gaz liquéfié au niveau d'une installation source, le stockage mobile contenant, après remplissage, du gaz liquéfié et une fraction du gaz vaporisé, le procédé comprenant un déplacement du stockage mobile de l'installation source jusqu'à une station receveuse et un transfert de gaz liquéfié du stockage mobile vers la station (3) receveuse.

Du fait de sa plus grande densité, l'hydrogène sous forme liquide est préféré lorsque de grandes quantités de produit doivent être transportées sur de grandes distances ou stockées.

A basse température des pertes par évaporation assez importantes peuvent se produire (ou un réchauffement du liquide significatif lors du transport et des transferts de produit). Typiquement, lorsqu'il est transporté par la route, ce produit se réchauffe de 0.5 à 1K par jour. Ce réchauffement peut entraîner des pertes par évaporation qui peuvent bien sûr être récupérées, réchauffées, comprimées après stockage et réinjectées dans un liquéfacteur. Ceci entraîne cependant des surcoûts.

Ce réchauffement entraîne, lorsque le liquide reste en équilibre à sa pression de saturation une montée en pression du stockage ainsi qu'une dilatation thermique de l'hydrogène (c'est-à-dire une baisse de densité). Or, l'utilisation principale envisagée de l'hydrogène liquide est dans des stations-service pour véhicules à piles à combustible où l'hydrogène liquide est pompé par des pompes volumétriques. Il est donc intéressant de garder l'hydrogène le plus dense possible, donc à la température la plus froide possible.

En outre, plus on livre de l'hydrogène dense (froid), plus on remplit en masse le réservoir de la station qui a un volume fixé. Il est donc pour ces raisons intéressant de conserver l'hydrogène le plus froid possible (ou à la pression la plus basse possible, si le liquide est en équilibre avec sa phase vapeur).

Un but de la présente invention est de pallier tout ou partie des inconvénients de l'art antérieur relevés ci-dessus.

A cette fin, le procédé selon l'invention, par ailleurs conforme à la définition générique qu'en donne le préambule ci-dessus, est essentiellement caractérisé en ce qu'il comprend une étape de refroidissement intermédiaire du gaz liquéfié contenu dans le stockage mobile entre l'installation source et la station receveuse au moyen d'un dispositif de refroidissement distinct du camion et du stockage mobile et comprenant un réservoir de gaz liquéfié et un organe de réfrigération.

Par ailleurs, des modes de réalisation de l'invention peuvent comporter l'une ou plusieurs des caractéristiques suivantes :
- l'étape de refroidissement intermédiaire comprend un prélèvement de gaz liquéfié du stockage mobile, un échange de chaleur entre ce gaz liquéfié prélevé et l'organe de réfrigération à l'extérieur et/ou à l'intérieur du réservoir de gaz liquéfié,
- l'organe de réfrigération comprend un réfrigérateur cryogénique, c'est-à-dire à une température comprise entre moins 100 degrés centigrade et moins 273 degrés centigrade, ledit réfrigérateur comprenant un circuit de travail formant une boucle et contenant un fluide de travail, le circuit de travail formant un cycle comprenant en série: un mécanisme de compression du fluide de travail, un mécanisme de refroidissement du fluide de travail, un mécanisme de détente du fluide de travail et un mécanisme de réchauffement du fluide de travail, le réfrigérateur comprenant une portion d'échange de chaleur permettant un échange de chaleur entre le fluide de travail détendu dans le mécanisme de détente et le stockage et/ou le fluide du stockage mobile,
- le fluide de travail réalise dans le circuit de travail un cycle thermodynamique de type Ericsson inverse,
- l'étape de refroidissement intermédiaire comprend un soutirage de gaz vaporisé contenu dans le stockage mobile vers l'extérieur du stockage mobile, un refroidissement de ce gaz vaporisé soutiré et une injection de ce gaz refroidi dans le réservoir de gaz liquéfié,
- l'étape de refroidissement intermédiaire comprend un soutirage de gaz vaporisé contenu dans le stockage mobile vers l'extérieur du stockage mobile et une injection directe de ce gaz refroidi dans la phase liquide du gaz liquéfié du réservoir de gaz liquéfié,
- la distance entre le dispositif de refroidissement et la station receveuse est inférieure à cent kilomètres et notamment inférieure à la distance entre l'installation source et le dispositif de refroidissement.

L'invention peut concerner également tout procédé alternatif comprenant toute combinaison des caractéristiques ci-dessus ou ci-dessous dans le cadre des revendications. D'autres particularités et avantages apparaîtront à la lecture de la description ci-après, faite en référence aux figures dans lesquelles :
[Fig. 1] représente une vue schématique et partielle illustrant un exemple de structure et de fonctionnement de l'invention,
[Fig. 2] représente un graphique illustrant schématiquement des variations de pression et de densité en fonction de la distance au sein d'un stockage mobile selon un exemple d'utilisation de l'invention.

Le système de production et de livraison de gaz liquéfié, notamment d'hydrogène liquide comprend une installation 1 source qui produit et stocke de l'hydrogène liquéfié (production par électrolyse et/ou reformage ou toute autre technologie appropriée). Cet hydrogène est liquéfié par un ou plusieurs liquéfacteurs et peut être stocké dans des récipients cryogéniques.

Le système comprend au moins stockage 2 mobile (stockage cryogénique monté sur un camion par exemple).

Ce stockage 2 mobile est rempli en gaz liquéfié au niveau de l'installation 1 source avant d'être déplacé de l'installation source 1 jusqu'à au moins une station 3 receveuse (comprenant un récipient cryogénique fixe de stockage du liquide). Classiquement le stockage 2 mobile contient du gaz liquéfié en partie inférieure et une fraction de ce gaz sous forme vaporisée en partie supérieure.

Selon une particularité avantageuse, une étape de refroidissement intermédiaire du gaz liquéfié contenu dans le stockage 2 mobile est prévue entre l'installation 1 source et la station 3 receveuse. Ce refroidissement intermédiaire est réalisé via un dispositif de refroidissement comprenant un réservoir 4 de gaz liquéfié et un organe 5 de réfrigération. Le dispositif de refroidissement est une entité distincte du stockage mobile, par exemple une station fixe intermédiaire à un emplacement déterminé sur le trajet entre l'installation source 1 et la station 3 receveuse. Par exemple, le réservoir 4 de gaz liquéfié contient le même gaz que celui transporté dans les stockages 2 mobiles. Ce gaz liquéfié dans le stockage 4 peut être maintenu en froid et même sous-refroidi par l'organe 5 de réfrigération.

Par exemple, les stockages 2 mobiles sont remplis à une usine 1 de liquéfaction d'hydrogène, puis le produit est transporté sur des distances de l'ordre, par exemple, de 200 à 1000 km pour être ensuite livré à une ou des stations 3 receveuses.

Pour un transport de 1000km de 24h, le liquide peut s'échauffer de 1K par exemple. La densité y est alors diminuée de 2kg/m3. Les pompes qui l'utiliseront en aval perdront alors environ 3% d'efficacité et le réservoir livré perdra également de l'ordre de si 3% de capacité de stockage par rapport à un hydrogène plus dense. Ces estimations ne prennent cependant pas en compte les temps d'attente des stockages mobiles avant de commencer la tournée, ni les inefficacités de la boucle logistique. Dans certains cas, la perte d'efficacité et de stockage peut atteindre 6%.

Le refroidissement 5 et réservoir 4 intermédiaire permettent de refroidir le fluide qui s'est trop réchauffé lors d'un transport longue distance. Ceci permet découpler le trajet de livraison en deux étapes, une première étape de transport de relativement plus longue distance (typiquement entre 500 et 1000 km) lors duquel le liquide se réchauffe, puis une deuxième étape de plus courte distance où l'hydrogène reste relativement plus froid. Ceci permet d'utiliser à l'entrée du réservoir receveur de la station 3 receveuse et des pompes correspondantes un hydrogène liquide plus dense et donc ainsi de gagner en capacité de stockage et de pompage à équipement identique. Ceci permet d'augmenter la capacité journalière de la station 3 receveuse et son autonomie entre deux livraisons.

Cette solution permet d'éviter l'investissement dans un système de recirculation du gaz de vaporisation (boil-off) et un surdimensionnement du liquéfacteur source 1 (au prix d'un léger surcoût énergétique de liquéfaction comme explicité ci-après).

La distance entre le dispositif 4, 5 de refroidissement intermédiaire et la ou les stations 3 receveuse est de préférence comprise entre 50 et 100 km. Le réchauffage du fluide est donc minimal lors du transport final. Ceci peut générer un gain pouvant aller jusqu'à 6% en capacité de pompage de la station 3 receveuse et en autonomie du réservoir de la station 3 receveuse entre deux livraisons.

De préférence, l'organe 5 de réfrigération comprend un réfrigérateur cryogénique, c'est-à-dire un appareil qui produit du froid à une température comprise entre moins 100 degrés centigrade et moins 273 degrés centigrade. Le réfrigérateur 5 cryogénique comprend ainsi un circuit de travail formant une boucle et contenant un fluide de travail (hélium et/ou tout autre gaz de l'air) Le circuit de travail forme un cycle comprenant en série: un mécanisme de compression du fluide de travail, un mécanisme de refroidissement du fluide de travail, un mécanisme de détente du fluide de travail et un mécanisme de réchauffement du fluide de travail, le réfrigérateur comprenant une portion d'échange de chaleur entre le fluide de travail détendu dans le mécanisme de détente et l'élément à refroidir (le stockage 4 ou le fluide qu'il contient et/ou le fluide du stockage 2 mobile comme décrit ci-après).

De préférence, le cycle de travail réalise un cycle thermodynamique qui est ou s'approche d'un cycle de type Ericsson inverse. Une tel réfrigérateur cryogénique est par exemple une machine du type « Tubro Brayton » commercialisée par la demanderesse.

Le refroidissement du liquide du stockage 2 mobile peut être réalisé de manière indirecte par exemple par la circulation du liquide vers un point froid externe au réservoir 4. Par exemple, le gaz liquéfié du stockage 2 mobile est amené dans un échangeur de chaleur assurant un échange avec le fluide de travail du réfrigérateur 5 réservoir.

Alternativement ou cumulativement, ce refroidissement peut être réalisé de manière directe dans/avec un échangeur de chaleur situé dans le stockage 4. Le gaz liquéfié du stockage 2 mobile peut ainsi être amené dans un échangeur de chaleur qui assure un échange de chaleur avec le fluide de travail dans le réservoir 5.

Le fluide refroidi est renvoyé dans le stockage 2 mobile.

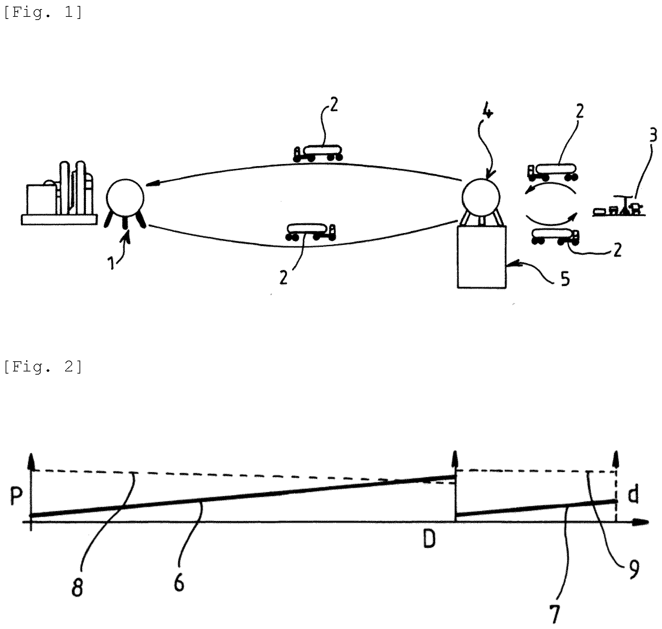

[Fig. 2] représente en traits continus 6, 7 un exemple de courbes de variation de pression P de l'hydrogène liquide stocké dans le stockage 2 mobile en fonction de la distance D lors de la première étape de déplacement et lors de la seconde étape de déplacement (les deux étapes sont séparées au niveau de la discontinuité). Les courbes 8, 9 en traits discontinus représentent des exemples de variations correspondantes de la densité (d) l'hydrogène liquide stocké dans le stockage 2 mobile lors de la première étape de déplacement et lors de la seconde étape de déplacement.

On constate que l'étape de refroidissement intermédiaire du gaz liquéfié permet de diminuer la pression et d'augmenter la densité du gaz liquéfié transporté qui sera livré aux stations 3 receveuses.

Le réservoir 4 de gaz liquéfié du dispositif de refroidissement peut être à géométrie cylindrique ou sphérique.

Le système peut le cas échéant récupérer les vapeurs du stockage 2 mobile, les refroidir (via le dispositif 4, 5 de refroidissement) et les injecter dans le réservoir 4 du gaz liquéfié (et/ou dans le stockage 2 mobile). Par exemple, ces vapeurs refroidies et le cas échant liquéfiées peuvent être réinjectées dans le ciel gazeux (partie supérieure) du réservoir 4 de gaz liquéfié pour faire baisser la pression.

Par exemple, ces vapeurs peuvent être récupérées et injectées directement (sans refroidissement préalable) dans la phase liquide du réservoir 4 de gaz liquéfié (en partie inférieure).

Par exemple, il peut y avoir un écart de température entre le fluide relativement plus chaud qui est injecté dans le réservoir 4 de gaz liquéfié intermédiaire et le fluide relativement plus froid qui est prélevé de ce réservoir intermédiaire 4. Cet écart de température peur être variable par exemple en fonction du nombre de stockages à refroidir.

Le système peut le cas échéant assurer la gestion des gaz de flash (« BOG ») en dehors des sites 1 de productions (liquéfacteurs) à proximité des utilisateurs 3 (simplification de la gestion de ces gaz de vaporisation « BOG »).

Il est possible de mettre en place un réseau de distribution locale (rayon inférieur par exemple à 100km) entre le réservoir de gaz liquéfié 4 réfrigéré et les utilisateurs finaux. Des stockages 2 mobiles et/ou conduites isolées peuvent être prévus pour distribuer le fluide du réservoir 4 de gaz liquéfié vers des utilisateurs.

De même, il peut être mis en place un réseau de récupération local des gaz de vaporisation (BOG) entre le réservoir 4 de gaz liquéfié et les utilisateurs finaux.

Ce réservoir4 de gaz liquéfié (refroidi ou sous refroidi par l'organe 5 de réfrigération) peut être utilisé comme une réserve de froid (utilisation du liquide relativement plus froid).

Le fluide en partie haute (gaz) peut être utilisé comme tampon thermique pour la matière (fluide) entrante, la matière froide en bas du réservoir servant à alimenter les consommateurs.

L'invention présente ainsi de nombreux avantages. La densité du liquide disponible au niveau des stations 3 receveuses est augmentée (et la température plus basse que selon l'art antérieur).

Un tel système permet une réduction des gaz de flash (BOG) et donc des pertes en particulier sur le réseau de distribution locale. La gestion des gaz de flash sur les sites permet d'alléger voire annuler leur gestion par un liquéfacteur. En effet, il n'y aura pas de génération de bouchon gazeux chaud au niveau du liquéfacteur qui pourrait significativement impacter la capacité de la production de liquide.

La gestion des flashs est rendue possible sur des sites 2 éloignés des liquéfacteurs 1 (ce qui est particulièrement s'il s'agit d'une station 3 receveuse consommatrice d'hydrogène générant elle-même des gaz de vaporisation (BOG)).

L'invention permet d'augmenter la distance de transport de gaz cryogéniques en optimisant le cas échéant la solution logistique avec des stockages 2 mobiles de grande capacité d'emport pour la première étape de transport logistique primaire et des stockages mobiles plus réduits et à plus forte manœuvrabilité pour la seconde phase de transport (accès dans les stations-services en centre-ville par exemple).

Les stockages 2 mobiles peuvent être transportés par des camions permettant ainsi de faire un transport urbain et interurbain optimisé.

## Revendications

1. Procédé de livraison de gaz liquéfié, notamment d'hydrogène, au moyen d'au moins un stockage (2) mobile transporté par camion, comprenant une étape de remplissage du stockage (2) mobile en gaz liquéfié au niveau d'une installation (1) source, le stockage (2) mobile contenant, après remplissage, du gaz liquéfié et une fraction du gaz vaporisé, le procédé comprenant un déplacement du stockage (2) mobile de l'installation source (1) jusqu'à une station (3) receveuse et un transfert de gaz liquéfié du stockage (2) mobile vers la station (3) receveuse, **caractérisé en ce qu'**il comprend une étape de refroidissement intermédiaire du gaz liquéfié contenu dans le stockage (2) mobile entre l'installation (1) source et la station (3) receveuse au moyen d'un dispositif de refroidissement distinct du camion et du stockage mobile et comprenant un réservoir (4) de gaz liquéfié et un organe (5) de réfrigération.

2. Procédé selon la revendication 1, **caractérisé en ce que** l'étape de refroidissement intermédiaire comprend un prélèvement de gaz liquéfié du stockage (2) mobile, un échange de chaleur entre ce gaz liquéfié prélevé et l'organe (5) de réfrigération à l'extérieur et/ou à l'intérieur du réservoir (4) de gaz liquéfié.

3. Procédé selon la revendication 1 ou 2, **caractérisé en ce que** l'organe (5) de réfrigération comprend un réfrigérateur cryogénique, c'est-à-dire à une température comprise entre moins 100 degrés centigrade et moins 273 degrés centigrade, ledit réfrigérateur comprenant un circuit de travail formant une boucle et contenant un fluide de travail, le circuit de travail formant un cycle comprenant en série: un mécanisme de compression du fluide de travail, un mécanisme de refroidissement du fluide de travail, un mécanisme de détente du fluide de travail et un mécanisme de réchauffement du fluide de travail, le réfrigérateur comprenant une portion d'échange de chaleur permettant un échange de chaleur entre le fluide de travail détendu dans le mécanisme de détente et le stockage (4) et/ou le fluide du stockage (2) mobile.

4. Procédé selon la revendication 3, **caractérisé en ce que** le fluide de travail réalise dans le circuit de travail un cycle thermodynamique de type Ericsson inverse.

5. Procédé selon l'une quelconque des revendications 1 à 4, **caractérisé en ce que** l'étape de refroidissement intermédiaire comprend un soutirage de gaz vaporisé contenu dans le stockage (2) mobile vers l'extérieur du stockage (2) mobile, un refroidissement de ce gaz vaporisé soutiré et une injection de ce gaz refroidi dans le réservoir (4) de gaz liquéfié.

6. Procédé selon l'une quelconque des revendications 1 à 5, **caractérisé en ce que** l'étape de refroidissement intermédiaire comprend un soutirage de gaz vaporisé contenu dans le stockage (2) mobile vers l'extérieur du stockage (2) mobile et une injection directe de ce gaz refroidi dans la phase liquide du gaz liquéfié du réservoir (4) de gaz liquéfié.

7. Procédé selon l'une quelconque des revendications 1 à 6, **caractérisé en ce que** la distance entre le dispositif (4, 5) de refroidissement et la station (3) receveuse est inférieure à cent kilomètres et notamment inférieure à la distance entre l'installation (1) source et le dispositif de refroidissement (4, 5).

## Patentansprüche

1. Verfahren zur Lieferung von Flüssiggas, insbesondere Wasserstoff, mittels mindestens eines per Lastwagen transportierten mobilen Speichers (2), welches einen Schritt des Füllens des mobilen Speichers (2) mit Flüssiggas an einer Quellanlage (1) umfasst, wobei der mobile Speicher (2) nach dem Füllen Flüssiggas und eine Fraktion des verdampften Gases enthält, wobei das Verfahren eine Bewegung des mobilen Speichers (2) von der Quellanlage (1) bis zu einer Empfangsstation (3) und eine Überleitung von Flüssiggas aus dem mobilen Speicher (2) zur Empfangsstation (3) umfasst, **dadurch gekennzeichnet, dass** es einen Schritt der Zwischenkühlung des in dem mobilen Speicher (2) enthaltenen Flüssiggases zwischen der Quellanlage (1) und der Empfangsstation (3) mittels einer Kühlvorrichtung umfasst, die von dem Lastwagen und dem mobilen Speicher verschieden ist und einen Flüssiggastank (4) und eine Kälteeinrichtung (5) umfasst.

2. Verfahren nach Anspruch 1, **dadurch gekennzeichnet, dass** der Schritt der Zwischenkühlung eine Entnahme von Flüssiggas aus dem mobilen Speicher (2) und einen Wärmeaustausch zwischen diesem entnommenen Flüssiggas und der Kälteeinrichtung (5) außerhalb und/oder innerhalb des Flüssiggastanks (4) umfasst.

3. Verfahren nach Anspruch 1 oder 2, **dadurch gekennzeichnet, dass** die Kälteeinrichtung (5) einen Kryogenkühler umfasst, das heißt zur Kühlung auf eine Temperatur zwischen minus 100 Grad Celsius und minus 273 Grad Celsius, wobei dieser Kühler einen Arbeitskreislauf umfasst, der eine Schleife bildet und Arbeitsfluid enthält, wobei der Arbeitskreislauf einen Kreislauf bildet, welcher in Reihe umfasst: einen Mechanismus zur Verdichtung des Arbeitsfluids, einen Mechanismus zur Kühlung des Arbeitsfluids, einen Mechanismus zur Entspannung des Arbeitsfluids und einen Mechanismus zur Erwärmung des Arbeitsfluids, wobei der Kühler einen Wärmeaustauschabschnitt umfasst, der einen Wärmeaustausch zwischen dem im Mechanismus zur Entspannung entspannten Arbeitsfluid und dem Speicher (4) und/oder dem Fluid des mobilen Speichers (2) ermöglicht.

4. Verfahren nach Anspruch 3, **dadurch gekennzeichnet, dass** das Arbeitsfluid in dem Arbeitskreislauf einen thermodynamischen Kreisprozess vom Typ eines inversen Ericsson-Kreisprozesses durchläuft.

5. Verfahren nach einem der Ansprüche 1 bis 4, **dadurch gekennzeichnet, dass** der Schritt der Zwischenkühlung eine Entnahme von in dem mobilen Speicher (2) enthaltenem verdampftem Gas nach außerhalb des mobilen Speichers (2), eine Kühlung dieses entnommenen verdampften Gases und eine Einspritzung dieses gekühlten Gases in den Flüssiggastank (4) umfasst.

6. Verfahren nach einem der Ansprüche 1 bis 5, **dadurch gekennzeichnet, dass** der Schritt der Zwischenkühlung eine Entnahme von in dem mobilen Speicher (2) enthaltenem verdampftem Gas nach außerhalb des mobilen Speichers (2) und eine direkte Einspritzung dieses gekühlten Gases in die flüssige Phase des Flüssiggases des Flüssiggastanks (4) umfasst.

7. Verfahren nach einem der Ansprüche 1 bis 6, **dadurch gekennzeichnet, dass** die Entfernung zwischen der Kühlvorrichtung (4, 5) und der Empfangsstation (3) kleiner als einhundert Kilometer und insbesondere kleiner als die Entfernung zwischen der Quellanlage (1) und der Kühlvorrichtung (4, 5) ist.

## Claims

1. Method for delivering liquefied gas, especially hydrogen, by means of at least one mobile storage facility (2) transported by lorry, comprising a step of filling the mobile storage facility (2) with liquefied gas at a source plant (1), the mobile storage facility (2) containing, after filling, liquefied gas and a fraction of the vaporized gas, the method comprising a movement of the mobile storage facility (2) from the source plant (1) to a receiving station (3) and a transfer of liquefied gas from the mobile storage facility (2) to the receiving station (3), **characterized in that** it comprises a step of interim cooling of the liquefied gas contained in the mobile storage facility (2) between the source plant (1) and the receiving station (3) by means of a cooling device separate from the lorry and from the mobile storage facility and comprising a liquefied gas tank (4) and a refrigerating element (5).

2. Method according to Claim 1, **characterized in that** the interim cooling step comprises a removal of liquefied gas from the mobile storage facility (2), and an exchange of heat between this removed liquefied gas and the refrigerating element (5) outside and/or inside the liquefied gas tank (4).

3. Method according to Claim 1 or 2, **characterized in that** the refrigerating element (5) comprises a refrigerator which is cryogenic, in other words is at a temperature of between minus 100 degrees centigrade and minus 273 degrees centigrade, said refrigerator comprising a working circuit forming a loop and containing a working fluid, the working circuit forming a cycle comprising in series: a mechanism for compressing the working fluid, a mechanism for cooling the working fluid, a mechanism for expanding the working fluid and a mechanism for reheating the working fluid, the refrigerator comprising a heat exchange portion permitting an exchange of heat between the working fluid expanded in the expansion mechanism and the storage facility (4) and/or the fluid of the mobile storage facility (2).

4. Method according to Claim 3, **characterized in that**, in the working circuit, the working fluid performs a thermodynamic cycle of reverse Ericsson type.

5. Method according to any one of Claims 1 to 4, **characterized in that** the interim cooling step comprises a withdrawal of vaporized gas contained in the mobile storage facility (2) to the outside of the mobile storage facility (2), a cooling of this withdrawn vaporized gas and an injection of this cooled gas into the liquefied gas tank (4).

6. Method according to any one of Claims 1 to 5, **characterized in that** the interim cooling step comprises a withdrawal of vaporized gas contained in the mobile storage facility (2) to the outside of the mobile storage facility (2) and a direct injection of this cooled gas into the liquid phase of the liquefied gas of the liquefied gas tank (4).

7. Method according to any one of Claims 1 to 6, **characterized in that** the distance between the cooling device (4, 5) and the receiving station (3) is less than a hundred kilometres and especially less than the distance between the source plant (1) and the cooling device (4, 5).
